# EUROPÄISCHE PATENTSCHRIFT

(11) **EP 1 080 992 B1**
(45) Veröffentlichungstag und Bekanntmachung des Hinweises auf die Patenterteilung: **19.05.2004**
(21) Anmeldenummer: 00116583.6
(22) Anmeldetag: 01.08.2000
(51) Int. Cl.: B60R 7/04, B60R 7/08

(54) **Ablagefach (Kartenfach)**
Storage compartment, in particular for maps
Réceptacle pour objets, notamment pour des cartes

(30) Priorität: 04.09.1999 DE 19942355
(43) Veröffentlichungstag der Anmeldung: 07.03.2001
(73) Patentinhaber: fischerwerke Artur Fischer GmbH & Co. KG, 72178 Waldachtal (DE); Bayerische Motoren Werke Aktiengesellschaft, 80788 München (DE)
(72) Erfinder: Heine, Daniel, 72280 Dornstetten (DE); Widulle, Rüdiger, 81547 München (DE)

(56) Entgegenhaltungen:
- WO-A-99/28155
- DE-U- 29 603 661
- PATENT ABSTRACTS OF JAPAN vol. 2000, no. 13, 5. Februar 2001 (2001-02-05) & JP 2000 289530 A (ARACO CORP), 17. Oktober 2000 (2000-10-17)

## Beschreibung

Die Erfindung betrifft ein Ablagefach (Kartenfach) zur Aufbewahrung flächiger Gegenstände wie Landkarten in einem Kraftwagen gemäß dem Oberbegriff des Anspruchs 1.

Aus der DE 296 03 661 U ist ein Kartenfach zur Aufbewahrung von Straßenkarten, Autoatlanten und sonstiger flächiger Gegenstände in einem Kraftwagen bekannt. Das bekannte Kartenfach ist an einer Rückseite einer Rückenlehne eines vorderen Fahrzeugsitzes angeordnet. Dabei bildet die Rückseite der Rückenlehne des Fahrzeugsitzes eine Anlage für die flächigen Gegenstände. An der Rückseite der Rückenlehne ist eine Platte als Andruckelement angeordnet, die zum Einlegen eines flächigen Gegenstandes von der Rückenlehne abgehoben werden kann. Die das Andruckelement bildende Platte drückt einen zwischen ihr und der die Anlage bildenden Rückseite der Rückenlehne des Fahrzeugsitzes einliegenden Gegenstand gegen die Rückseite des Fahrzeugsitzes, so dass der flächige Gegenstand im Ablagefach gehalten ist Umständlich ist das Einlegen eines Gegenstandes in das bekannte Ablagefach, da dazu das Andruckelement mit einer Hand in Abstand von der Rückenlehne gehalten werden muss, um den Gegenstand in das Ablagefach einlegen zu können.

Der Erfindung liegt die Aufgabe zugrunde, ein derartiges Ablagefach vorzuschlagen, das einfach in seiner Handhabung ist und bei Nichtgebrauch einen geringen Platzbedarf hat.

Diese Aufgabe wird erfindungsgemäß durch die Merkmale des Anspruchs 1 gelöst. Das erfindungsgemäße Ablagefach weist eine Anlage für die flächigen Gegenstände auf. Diese Anlage kann beispielsweise eine Seitenwand wie eine Türinnenverkleidung eines Kraftwagens oder eine Seitenwand eines in den Kraftwagen eingestellten oder im Kraftwagen angebrachten Behälters sein. Desweiteren weist das erfindungsgemäße Ablagefach ein beispielsweise plattenförmiges Andruckelement auf, das mit einer Führung zwischen einer der Anlage des Ablagefachs nahen oder an der Anlage anliegenden Stellung und einer von der Anlage beabstandeten Stellung hin- und herbeweglich geführt ist. Ein Andruckfederelement drückt das Andruckelement in Richtung der Anlage des Ablagefachs, so dass bei Gebrauch des Ablagefachs zwischen der Anlage und dem Andruckelement einliegende Gegenstände zwischen dem Andruckelement und der Anlage festgeklemmt sind. Bei Nichtgebrauch drückt das Andruckfederelement das Andruckelement in Richtung der Anlage, vorzugsweise liegt das Andruckelement an der Anlage an, so dass das Ablagefach einen geringen Platzbedarf hat.

Desweiteren weist das erfindungsgemäße Ablagefach eine Halteeinrichtung auf, die das Andruckelement lösbar in der von der Anlage beabstandeten Stellung gegen die Kraft des Andruckfederelements hält. Die Halteeinrichtung vereinfacht das Einlegen flächiger Gegenstände in das Ablagefach. Zum Einlegen der flächigen Gegenstände wird das Andruckelement gegen die Kraft des Andruckfederelementes in Abstand von der Anlage gebracht und dieser beabstandeten Stellung von der Halteeinrichtung gehalten. Das Andruckelement kann nun losgelassen werden, die flächigen Gegenstände werden zwischen die Anlage und das Andruckelement in das erfindungsgemäße Ablagefach eingelegt. Danach wird die Halteeinrichtung gelöst und das Andruckfederelement drückt das Andruckelement gegen die in das Ablagefach eingelegten, flächigen Gegenstände und diese wiederum gegen die Anlage des Ablagefachs, so dass die eingelegten Gegenstände klemmend zwischen dem Andruckelement und der Anlage des erfindungsgemäßen Ablagefachs gehalten sind. Als Andruckfederelement können an sich bekannte Federelemente aus Metall wie Blattfedern, Schenkelfedern, Schraubendruck-, Zug- oder Torsionsfederelemente, Gummiringe oder Gummischnüre und dgl., Verwendung finden.

Zur platzsparenden Ausbildung des erfindungsgemäßen Ablagefachs ist bei einer Ausgestaltung der Erfindung eine Aussparung vorgesehen, in welcher das Andruckelement bei Nichtgebrauch in der an der Anlage anliegenden Stellung einliegt.

Das beispielsweise plattenförmige Andruckelement kann beispielsweise um eine Schwenkachse, die parallel zu seinem unteren Rand verläuft von der Anlage des Ablagefachs weg verschwenkbar geführt sein. Eine Ausgestaltung der Erfindung sieht eine Parallelführung für das Andruckelement vor, wobei Parallelführung im Sinne der Erfindung nicht streng auf eine exakt parallele Führung beschränkt sein sondern auch Winkelabweichungen des Andruckelements umfassen soll.

Zur in etwa parallelen Führung des Andruckelements ist bei einer Ausgestaltung eine Schiebeführung mit Führungsbahnen vorgesehen, mit denen das Andruckelement verschieblich geführt ist. Eine andere Ausgestaltung der Erfindung sieht eine Führung des Andruckelements mit Schwenkhebeln beispielsweise eine Parallelogrammführung vor.

Bei einer Ausgestaltung der Erfindung ist die Führung für das Andruckelement zugleich als Halteeinrichtung ausgebildet, die das Andruckelement in der von der Anlage des Ablagefachs beabstandeten Stellung gegen die Kraft des Andruckfederelements hält. Die Ausbildung als Halteeinrichtung kann im Falle der Führung des Andruckelements mit Führungsbahnen dadurch verwirklicht sein, dass die Führungsbahnen mit Abstand von der Anlage des Ablagefachs in etwa rechtwinklig zu einer Wirkungsrichtung des Andruckfederelements verlaufen. Nimmt das Andruckelement seine von der Anlage beabstandete Stellung ein, so befindet sich das Andruckelement an einer Stelle der Führungsbahnen, an der die Führungsbahnen rechtwinklig zur Wirkungslinie des Andruckfederelements verlaufen und dadurch das Andruckelement gegen eine Verschiebung durch das Andruckfederelement sperren. Auch können der Anlage ferner Endabschnitte der Führungsbahnen so verlaufen, daß das Andruckfederelement das Andruckelement gegen geschlossene Enden der Endabschnitte der Führungsbahnen drückt. Zum Lösen wird das Andruckelement gegen die Kraft des Andruckfederelements in den Teil der Führungsbahnen verbracht, in dem das Andruckfederelement das Andruckelement gegen die Anlage drückt. Bei einer Schwenkhebelführung des Andruckelements können die Schwenkhebel so angeordnet sein, dass sie, wenn sich das Andruckelement in der von der Anlage des Ablagefachs beabstandeten Stellung befindet, parallel zur Wirkungsrichtung des Andruckfederelements verlaufen und dadurch das Andruckelement gegen eine Bewegung durch das Andruckfederelement sperren. Auch können die Schwenkhebel so angeordnet sein, dass sie vom Andruckfederelement gegen einen ihren Schwenkwinkel begrenzenden Anschlag gedrückt werden, wenn das Andruckelement seine von der Anlage beabstandete Stellung einnimmt. Eine weitere Möglichkeit, das Andruckelement gegen die Kraft des Andruckfederelements in der von der Anlage des Ablagefachs beabstandeten Stellung zu halten ist es, eine dem Fachmann an sich bekannte, sog. Push-Push- oder Herzkurvenverriegelungseinrichtung vorzusehen.

Zur Führung des Andruckelements können auch eine Schiebeführung und eine Schwenkhebelführung kombiniert werden.

Die Erfindung wird nachfolgend anhand eines in der Zeichnung dargestellten Ausführungsbeispiels näher erläutert. Es zeigen:
- Figur 1: eine Explosionsdarstellung eines Ablagefachs gemäß der Erfindung in Perspektive; und
- Figuren 2 bis 4: das Ablagefach aus Figur 1 in zusammengesetztem Zustand in unterschiedlichen Stellungen in einer Querschnittsdarstellung.

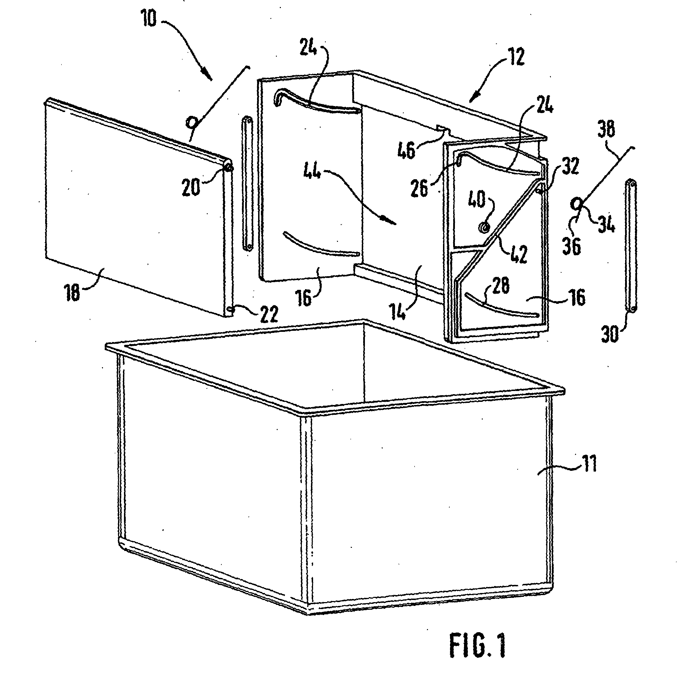

Das in Figur 1 dargestellte, erfindungsgemäße Ablagefach 10 ist als Kartenfach zur Aufbewahrung von Land- und Straßenkarten oder dergleichen flächiger Gegenstände in einem Kraftwagen vorgesehen. Das Ablagefach 10 läßt sich beispielsweise in eine Türverkleidung integrieren. Im dargestellten Ausführungsbeispiel ist das Ablagefach 10 zum Einsetzen in einen schachtelförmigen, oben offenen, größeren Behälter 11 vorgesehen, der seinerseits in einem nicht dargestellten Kraftwagen unterbringbar ist.

Das Ablagefach 10 weist ein Grundteil 12 mit einer Seitenwand 14 auf, von deren beiden Enden zwei kürzere Stirnwände 16 rechtwinklig abstehen. Die Seitenwand 14 bildet eine ebenfalls mit 14 bezeichnete Anlage für die aufzubewahrenden, nicht dargestellten Land- und Straßenkarten. Desweiteren weist das Ablagefach 10 ein plattenförmiges, rechteckiges Andruckelement 18 auf, das seitlich abstehende Führungszapfen 20, 22 nahe seinem oberen und unterem Rand aufweist. Mit dem oberen Führungszapfen 20 ist das Andruckelement 18 in Führungsbahnen 24 verschiebbar geführt, die als Schlitze ausgebildet und in einem oberen Bereich der Stirnwände 16 des Grundteils 12 angebracht sind. Die Führungsbahnen 24 verlaufen bogenförmig zunächst näherungsweise rechtwinklig von der Seitenwand 14 weg nach oben und gehen am Ende in Abstand von der Seitenwand 14 in einen senkrecht nach unten und zur Seitenwand 14 parallelen Abschnitt über. Dieser Endabschnitt der Führungsbahnen 24 ist mit der Bezugszahl 26 bezeichnet. In zusammengesetztem Zustand des Ablagefachs 10 liegen die oberen Führungszapfen 20 des Andruckelements 18 in den Führungsbahnen 24 ein und sind in diesen verschieblich geführt. Die unteren Führungszapfen 22 des Andruckelements 18 durchgreifen in zusammengesetztem Zustand des Ablagefachs 10 Schlitze 28, die im unteren Teil der Stirnwände 16 des Grundteils 12 angebracht sind. An den unteren Führungszapfen 22 ist das Andruckelement 18 mit einem Paar Schwenkhebel 30 auf einem Kreisbogenabschnitt um Schwenkzapfen 32 herum verschieblich geführt, wobei die Schwenkzapfen 32 nach außen abstehend auf Außenseiten der Stirnwände 16 unterhalb der Führungsbahnen 24 und nahe der Seitenwand 14 angeordnet sind. Die Schlitze 28 im unteren Bereich der Stirnwände 16 verlaufen kreisbogenförmig um die Schwenkzapfen 32 herum. Es ist möglich, das Andruckelement 18 mit den unteren Führungszapfen 22 verschieblich in den Schlitzen 28 im unteren Bereich der Stirnwände 16 zu führen. Im dargestellten Ausführungsbeispiel haben die Schlitze 28 im unteren Bereich der Stirnwände 16 keine Führungsfunktion, sie haben ausschließlich den Zweck, den Durchtritt der unteren Führungszapfen 22 durch die Stirnwände 16 des Grundteils 12 zu ermöglichen, um das Andruckelement 18 an dessen unteren Führungszapfen 22 auf den Außenseiten der Stirnwände 16 des Grundteils 12 mit den dort angeordneten Schwenkhebeln 30 beweglich zu führen.

Desweiteren weist das Ablagefach 10 zwei Andruckfederelemente 34 auf, die das Andruckelement 18 gegen die Seitenwand 14 drücken. Im dargestellten Ausführungsbeispiel sind Torsionsschraubenfedern 34 mit einem kurzen und einem langen Schenkel 36, 38 als Andruckfederelemente 34 verwendet. Die Torsionsschraubenfedern 34 sind auf den Außenseiten der Stirnwände 16 des Grundteils 12 angeordnet, die Torsionsschraubenfedern 34 sind auf kurze, rohrförmige Federaufnahmen 40 aufgesetzt, die auf den Außenseiten der Stirnwände 16 angebracht sind. Mit ihren kurzen Schenkeln 16 stützen sich die Torsionsschraubenfedern 16 an einer Versteifungsrippe 42 der Stirnwände 16 ab, mit den langen Schenkeln 38 greifen die Torsionsschraubenfedem 34 an den oberen Führungszapfen 20 des Andruckelements 18 an und drücken dieses in Richtung der Seitenwand 14.

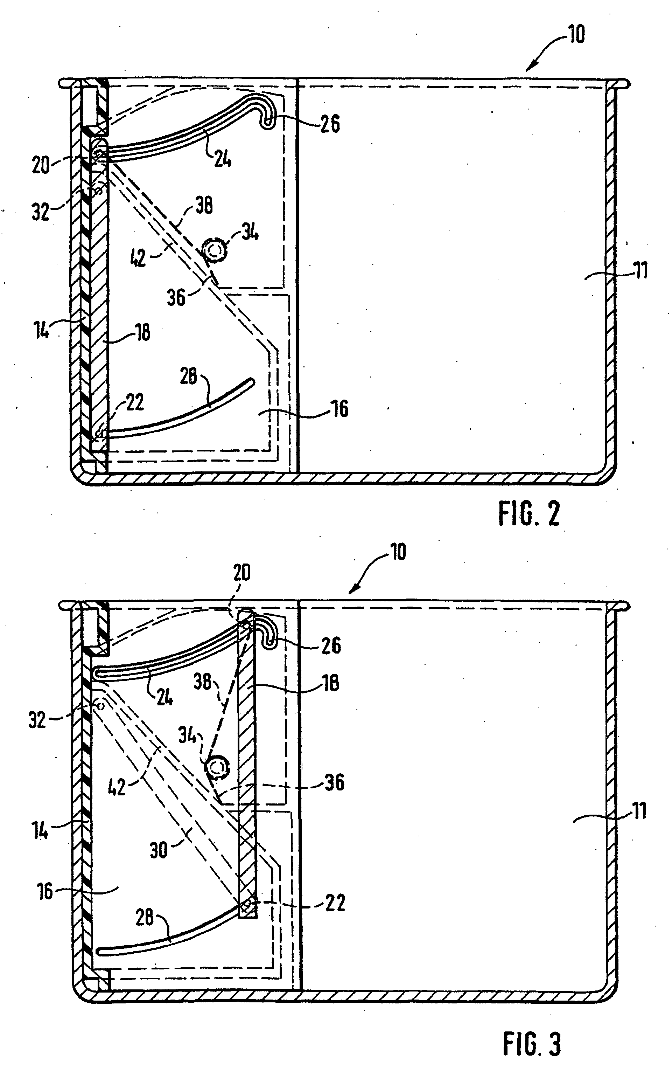

In der Seitenwand 14 ist eine rechteckförmige Aussparung 44 angebracht, in welcher das Andruckelement 18 in einer Nichtgebrauchsstellung bündig versenkt einliegt, wie in Figur 2 dargestellt. Um das Andruckelement 18 in der Nichtgebrauchsstellung greifen zu können, weist die Aussparung 44 eine Grifföffnung 46 in der Mitte ihrer Oberseite auf.

Das erfindungsgemäße Ablagefach 10 ist im dargestellten Ausführungsbeispiel als Einsatz für den größeren Behälter 11 vorgesehen. Es wird mit der Seitenwand 14 seines Grundteils 12 an einer Seitenwand des Behälters 11 anliegend in diesen eingesetzt, wobei die Stirnwände 16 des Grundteils 12 des Ablagefachs 10 an angrenzenden Seitenwänden des Behälters 11 anliegen.

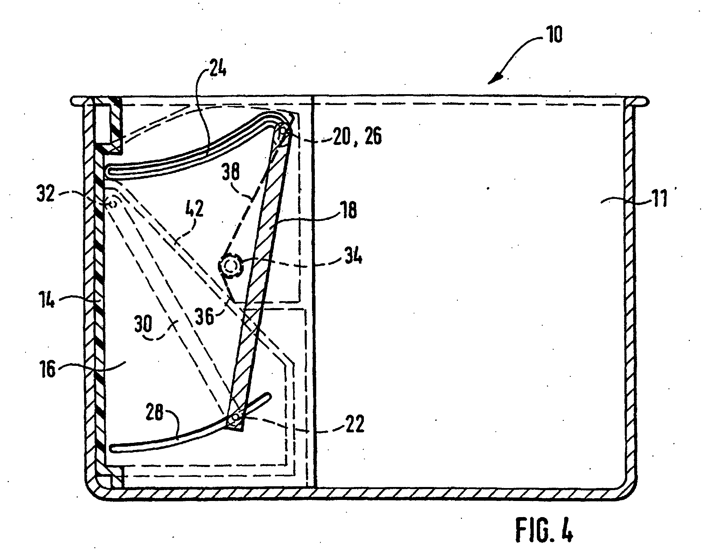

Die Funktion des erfindungsgemäßen Ablagefachs 10 wird nachfolgend anhand der Figuren 2 bis 4 erläutert. Zum Einlegen von Land- oder Straßenkarten in das Ablagefach 10 wird dessen plattenförmiges Andruckelement 18 durch die Grifföffnung 46 im Grundteil 12 ergriffen und gegen die Federkraft der Torsionsschraubenfedern 34 von der Seitenwand 14 weg über die in Figur 3 dargestellte Stellung bis in die in Figur 4 dargestellte, von der Seitenwand 14 beabstandete Stellung bewegt. Dabei wird das Andruckelement 18 oben in den Führungsbahnen 24 und unten mit den Schwenkhebeln 30 beweglich geführt. Bei der Bewegung des Andruckelements 18 von der in Figur 2 dargestellten, Nichtgebrauchsstellung bis in die in Figur 3 dargestellte Zwischenstellung kurz vor dem Übergang in die senkrecht nach unten verlaufenden Endabschnitte 26 der Führungsbahnen 24 wird das Andruckelement 18 parallel zur Seitenwand 14 verschoben. Am Ende der Bewegung wird das Andruckelement 18 nach unten in die senkrecht verlaufenden Endabschnitte 26 der Führungsbahnen 24 gedrückt, wobei sich ein unterer, an den unteren Führungszapfen 22 mit den Schwenkhebeln 30 geführter Rand des Andruckelements 18 ein kurzes Stück zurück in Richtung der Seitenwand 14 bewegt. Dabei stellt sich das Andruckelement 18 schräg, wie in Figur 4 zu sehen. In dieser in Figur 4 dargestellten, von der Seitenwand 14 beabstandeten Endestellung des Andruckelements 18 befinden sich dessen obere Führungszapfen 20 in den Endabschnitten 26 der Führungsbahnen 24, wobei diese Endabschnitte 26 der Führungsbahnen 24 in etwa senkrecht zu einer Wirkungsrichtung der Torsionsschraubenfedern 34 verlaufen und dadurch das Andruckelement 18 in der von der Seitenwand 14 beabstandeten Endstellung gegen die Kraft der Torsionsschraubenfedern 34 halten. Die Führungsbahnen 24 bilden mit ihren senkrecht verlaufenden Endabschnitten 26 eine ebenfalls mit 26 bezeichnete Halteeinrichtung für das Andruckelement 18 in dessen von der Seitenwand 14 beabstandeter Endstellung. Das Andruckelement 18 kann in dieser Endstellung losgelassen und die einzulegenden Land- oder Straßenkarten können zwischen das Andruckelement 18 und die Seitenwand 14 in das Ablagefach 10 eingelegt werden. Daran anschließend wird das Andruckelement 18 kurz angehoben, so dass seine oberen Führungszapfen 20 aus den senkrechten Endabschnitten 26 der Führungsbahnen 24 herauskommen. Das Andruckelement 18 wird dann von den Torsionsschraubenfedern 34 gegen die nicht dargestellten, in das Ablagefach 10 eingelegten Land- und Straßenkarten gedrückt und hält diese klemmend zwischen dem Andruckelement 18 und der Seitenwand 14. Da das Andruckelement 18 in seiner in Figur 4 dargestellten, von der Seitenwand 14 beabstandeten Endstellung selbststätig verbleibt und losgelassen werden kann, ist das Einlegen der Land- oder Straßenkarten auch mit einer Hand einfach möglich.

## Patentansprüche

1. Ablagefach zur Aufbewahrung flächiger Gegenstände wie Landkarten in einem Kraftwagen, mit einer Anlage (14) für die flächigen Gegenstände, mit einem Andruckelement (18), mit einer Führung (24, 26, 30) für das Andruckelement (18), die das Andruckelement (18) zwischen einer der Anlage (14) nahen oder an der Anlage (14) anliegenden Stellung und einer von der Anlage (14) beabstandeten Stellung hin- und herbeweglich führt, **dadurch gekennzeichnet, dass** das Ablagefach (10) ein Andruckfederelement (34), welches das Andruckelement (18) in Richtung der Anlage (14) drückt, und eine Halteeinrichtung (20, 26), die das Andruckelement (18) gegen die Kraft des Andruckfederelements (34) lösbar in der von der Anlage (14) beabstandeten Stellung hält, aufweist.

2. Ablagefach nach Anspruch 1, **dadurch gekennzeichnet, dass** das Ablagefach (10) eine Aussparung (42) aufweist, in der das Andruckelement (18) in der an der Anlage (14) anliegenden Stellung einliegt.

3. Ablagefach nach Anspruch 1, **dadurch gekennzeichnet, dass** die Führung (24, 26, 30) das Andruckelement (18) in etwa parallel verschieblich führt.

4. Ablagefach nach Anspruch 3, **dadurch gekennzeichnet, dass** die Führung eine Schiebeführung mit Führungsbahnen (24, 26), mit denen das Andruckelement (18) verschieblich geführt ist, aufweist.

5. Ablagefach nach Anspruch 3, **dadurch gekennzeichnet, dass** die Führung eine Schwenkhebelführung (30) aufweist.

6. Ablagefach nach Anspruch 1, **dadurch gekennzeichnet, dass** die Führung (24, 26) für das Andruckelement (18) zugleich die Halteeinrichtung (20, 26) bildet, die das Andruckelement (18) gegen die Kraft des Andruckfederelements (34) lösbar in der von der Anlage (14) beabstandeten Stellung hält.

7. Ablagefach nach Anspruch 4 und 6, **dadurch gekennzeichnet, dass** die Führungsbahnen (24, 26) in Abstand von der Anlage (14) so verlaufen, dass sie das Andruckelement (18) in der von der Anlage (14) beabstandeten Stellung gegen eine Verschiebung durch das Andruckfederelement (34) sperren.

## Claims

1. A storage pocket for storing flat items, such as road maps, in a motor vehicle, having a support (14) for the flat items, a pressure element (18), a guide (24, 26, 30) for the pressure element (18), which guides the pressure element (18) back and forth between a position close to the support (14) or abutting the support (14) and a position spaced from the support (14), **characterised in that** the storage pocket (10) has a force-applying spring element (34), which presses the pressure element (18) towards the support (14), and a holding device (20, 26), which holds the pressure element (18) against the force of the force-applying spring element (34) releasably in the position spaced from the support (14).

2. A storage pocket according to claim 1, **characterised in that** the storage pocket (10) has a recess (42) in which the pressure element (18) lies in the position abutting the support (14).

3. A storage pocket according to claim 1, **characterised in that** the guide (24, 26, 30) slidingly guides the pressure element (18) so as to be approximately parallel.

4. A storage pocket according to claim 3, **characterised in that** the guide comprises a sliding guide with guideways (24, 26) with which the pressure element (18) is slidingly guided.

5. A storage pocket according to claim 3, **characterised in that** the guide comprises a pivoted lever guide (30).

6. A storage pocket according to claim 1, **characterised in that** the guide (24, 26) for the pressure element (18) forms at the same time the holding device (20, 26) which holds the pressure element (18) against the force of the force-applying spring element (34) releasably in the position spaced from the support (14).

7. A storage pocket according to claims 4 and 6, **characterised in that** the guideways (24, 26) extend, spaced from the support (14), in such a way that they block the pressure element (18) in the position spaced from the support (14) against displacement by the force-applying spring element (34).

## Revendications

1. Réceptacle de rangement destiné au rangement des objets plats tels que des cartes routières dans un véhicule automobile, comprenant un appui (14) pour les objets plats, un élément de pression (18), un guidage (24, 26, 30) pour l'élément de pression (18), qui guide l'élément de pression (18) dans un mouvement de va-et-vient entre une position proche de l'appui (14) ou en contact contre l'appui (14) et une position écartée de l'appui (14), **caractérisé en ce que** le réceptacle de rangement (10) comprend un élément à ressort de pression (34), qui pousse l'élément de pression (18) en direction de l'appui (14), et un dispositif de retenue (20, 26), qui maintient l'élément à ressort de pression (18) à l'encontre de la force de l'élément à ressort de pression (34) de manière amovible dans la position écartée de l'appui (14).

2. Réceptacle de rangement selon la revendication 1, **caractérisé en ce que** le réceptacle de rangement (10) comprend un évidement (42), dans lequel est inséré l'élément de pression (18) dans la position en contact contre l'appui (14).

3. Réceptacle de rangement selon la revendication 1, **caractérisé en ce que** par le guidage (24, 26, 30) l'élément de pression (18) est guidé de manière coulissante pratiquement parallèlement.

4. Réceptacle de rangement selon la revendication 3, **caractérisé en ce que** le guidage comprend un guidage coulissant avec des glissières de guidage (24, 26), par lesquelles l'élément de pression (18) est guidé par coulissement.

5. Réceptacle de rangement selon la revendication 3, **caractérisé en ce que** le guidage est un guidage à bras pivotants (30).

6. Réceptacle de rangement selon la revendication 1, **caractérisé en ce que** le guidage (24, 26) pour l'élément de pression (18) forme en même temps le dispositif de retenue (20, 26), par lequel l'élément de pression (18) est maintenu à l'encontre de la force de l'élément à ressort de pression (34) dans la position écartée de l'appui (14).

7. Réceptacle de rangement selon les revendications 4 et 6, **caractérisé en ce que** les glissières de guidage (24, 26) s'étendent en s'écartant de l'appui (14), de telle sorte qu'elles bloquent l'élément de pression (18) dans la position écartée de l'appui (14) en empêchant tout mouvement provoqué par l'élément à ressort de pression (34).
